# FASCICULE DE BREVET EUROPEEN

(11) **EP 2 540 555 B1**
(45) Date de publication et mention de la délivrance du brevet: **17.12.2014**
(21) Numéro de dépôt: 12171887.8
(22) Date de dépôt: 13.06.2012
(51) Int. Cl.: B60N 2/015

(54) **Mécanisme d'ancrage d'un siège automobile**
Verankerungsmechanismus für Sitz eines Kraftfahrzeugs
Anchoring mechanism of an automobile seat

(30) Priorité: 28.06.2011 FR 1155743
(43) Date de publication de la demande: 02.01.2013
(73) Titulaire: GRUPO ANTOLIN-INGENIERIA, S.A., 09080 Burgos (ES)
(72) Inventeur: Saiz, Rodrigo, 09002 Burgos (ES); Marañon, Miguel, 09004 BURGOS (ES)
(74) Mandataire: Delorme, Nicolas

(56) Documents cités:
- EP-A2- 0 925 995
- FR-A1- 2 829 440
- FR-A1- 2 859 953

## Description

La présente invention concerne un mécanisme d'ancrage d'un siège de véhicule, notamment d'un siège de véhicule automobile, et un siège de véhicule équipé de ce mécanisme.

De nombreux véhicules automobiles sont équipés de sièges amovibles. A cette fin, les sièges sont dotés de mécanismes d'ancrage conçus pour être verrouillés, et en alternance déverrouillés à un plancher du véhicule.

Dans certaines configurations, le plancher est équipé d'un fil d'ancrage sur lequel le siège vient se fixer.

Un mécanisme d'ancrage comprend typiquement un moyen de réception du fil d'ancrage et un moyen de verrouillage dudit fil d'ancrage. Le moyen de verrouillage est mobile entre une position verrouillée dans laquelle le moyen de verrouillage est agencé pour emprisonner le fil d'ancrage dans le moyen de réception, et une position déverrouillée dans laquelle le moyen de verrouillage est agencé pour libérer le fil d'ancrage.

Le document FR2859953 est considéré comme l'art antérieur le plus proche, il décrit un mécanisme d'ancrage comportant toutes les caractéristiques du préambule de la revendication 1. Ce doucument décrit un siège de véhicule amovible comportant des dispositifs de verrouillage avant et arrière fixés sur des ancrages. Le dispositif de verrouillage avant permet au siège de pivoter vers l'avant et comporte un organe de commande qui appuie sur le plancher du véhicule lorsque le siège est en position normale d'utilisation et qui pivote en déverrouillant le dispositif de verrouillage avant lorsque le siège pivote vers l'avant.

En plus de répondre aux fonctions de verrouillage et de déverrouillage, il importe que le mécanisme d'ancrage présente une structure fiable, générant peu de bruits parasites et qui soit d'une utilisation intuitive.

Dans ce contexte, un but de l'invention est de proposer un mécanisme d'ancrage d'un siège au plancher d'un véhicule garantissant un verrouillage effectif et dont la mise en oeuvre nécessite un minimum d'intervention d'un utilisateur.

L'invention concerne ainsi un mécanisme d'ancrage d'un siège de véhicule à un fil d'ancrage fixé directement ou indirectement à un plancher dudit véhicule, tel que défini dans la revendication 1.

Lors d'une opération de verrouillage d'un siège équipé du mécanisme d'ancrage selon l'invention, le siège est initialement surélevé par rapport au plancher. Dans ces conditions, le moyen de détection est rappelé en position de repos par le premier moyen de rappel, et le moyen de verrouillage est rappelé en position déverrouillée par le second moyen de rappel. Le fil d'ancrage est alors apte à être reçu dans le moyen de réception.

Dès que le moyen de détection prend appui sur le plancher, le moyen de détection entraine le moyen de verrouillage de sa position déverrouillée vers sa position verrouillée, par l'intermédiaire du premier moyen de rappel. Le moyen de verrouillage peut emprisonner le fil d'ancrage dans le moyen de réception.

Le verrouillage du mécanisme d'ancrage selon l'invention ne nécessite ainsi aucune intervention de l'utilisateur.

Ainsi, lors d'une opération de déverrouillage du siège, il suffit qu'un utilisateur surélève le siège par rapport au plancher pour que le premier moyen de rappel rappelle le moyen de détection vers sa position de repos. Dans ce cas, le moyen de détection entraine le moyen de verrouillage de sa position verrouillée vers sa position déverrouillée, par l'intermédiaire du second moyen de rappel. Le déverrouillage du mécanisme d'ancrage selon l'invention ne nécessite ainsi aucune intervention de l'utilisateur.

Le mécanisme d'ancrage selon l'invention peut comporter une ou plusieurs des caractéristiques suivantes.

Dans sa forme d'exécution préférée, le moyen de verrouillage présente la forme d'un crochet.

Suivant une caractéristique, le moyen de verrouillage comprend un bord intérieur et un bord extérieur concaves, le bord extérieur étant conformé de sorte qu'en réponse à un déplacement du moyen de verrouillage transversalement au fil d'ancrage, le fil d'ancrage exerce une force sur le bord extérieur entrainant le déplacement du moyen de verrouillage de sa position verrouillée vers sa position déverrouillée.

De préférence, le bord extérieur présente une rampe inclinée de sorte qu'en réponse à un déplacement du moyen de verrouillage transversalement au fil d'ancrage, ce dernier exerce une force sur la rampe entrainant le déplacement du moyen de verrouillage de sa position verrouillée vers sa position déverrouillée.

Dans ces conditions, le positionnement du fil d'ancrage à l'intérieur du moyen de réception est facilité.

Dans sa forme d'exécution préférée, le moyen de détection et le moyen de verrouillage sont montés pivotants sur le moyen de support autour d'un même axe.

Suivant une caractéristique, le moyen de détection comprend une butée s'étendant sensiblement axialement, et le moyen de verrouillage est agencé pour prendre appui contre ladite butée.

La butée forme un contre-appui s'opposant à la force exercée par le second moyen de rappel sur le moyen de verrouillage. La butée permet de maintenir un écartement prédéterminé entre le moyen de verrouillage et le moyen de détection.

Par « axialement » on entend parallèlement à l'axe de pivotement des moyens de détection et de verrouillage.

De préférence, le moyen de réception comprend une butée s'étendant sensiblement axialement, et le moyen de verrouillage est agencé pour prendre appui contre la dite butée en position déverrouillée.

Cette dernière butée forme un contre-appui additionnel.

Avantageusement, le moyen de détection présente un talon destiné à prendre appui directement ou indirectement contre le plancher du véhicule, ce talon présente une partie courbée convexe prolongée par une partie plane.

Une telle conformation permet de guider le pivotement du moyen de détection de sa position de repos vers sa position d'appui.

Par exemple, le premier et/ou le second moyens de rappel élastique sont des ressorts de traction ou de torsion.

L'invention concerne également un siège de véhicule, notamment de véhicule automobile, **caractérisé en ce qu'**il est équipé d'un mécanisme d'ancrage tel que présenté ci-avant.

L'invention sera mieux comprise à la lecture de la description qui suit en référence au dessin schématique annexé représentant, à titre d'exemple non limitatif, une forme d'exécution d'un mécanisme d'ancrage selon l'invention:
Figure 1 à 3 sont des vues de côté du mécanisme selon une première orientation ; et
figure 4 est une vue partielle de côté du mécanisme des figures 1 à 3 selon une seconde orientation.

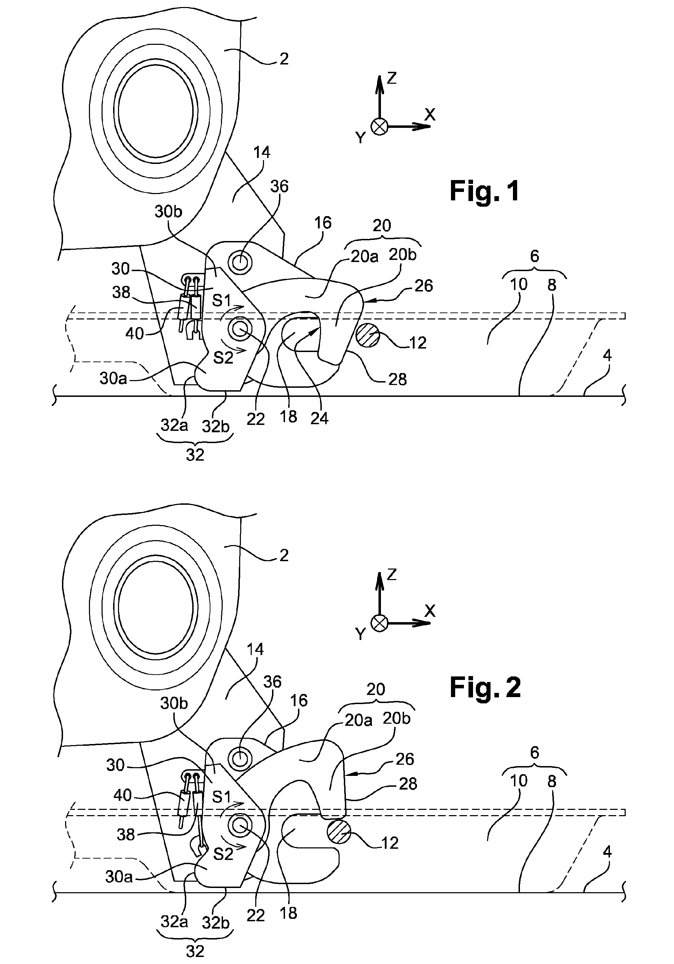

Les figures 1 à 4 sont représentées dans un même repère orthogonal lié au moyen de support et formé par des directions x, y et z.

Les figures 1 à 4 réprésentent un mécanisme 1 d'ancrage d'un siège 2 de véhicule automobile qui est partiellement représenté. De façon connue, le véhicule comprend un plancher 4 sur lequel est fixé un rail 6. Ici, le rail 6 s'étend sensiblement parallèlement à la direction x.

Le rail 6 comprend une paroi de fond 8 et deux parois latérales 10 s'étendant sensiblement perpendiculairement à ladite paroi de fond 8. Le rail 6 comprend un fil 12 d'ancrage s'étendant entre les parois latérales 10. Le fil 12 s'étend parallèlement à la direction y.

Le mécanisme 1 comporte un pied 14 formant un moyen de support du siège. Le pied 14 est fixé au siège 2 de façon rigide.

Dans le prolongement du pied 14, le mécanisme 1 comporte une plaque 16. Cette plaque 16 présente une encoche 18 formant un moyen de réception du fil 12. Dans la forme d'exécution illustrée, l'encoche 18 présente un profil sensiblement en 'U'. La plaque 16 est fixée au pied 14 de manière rigide.

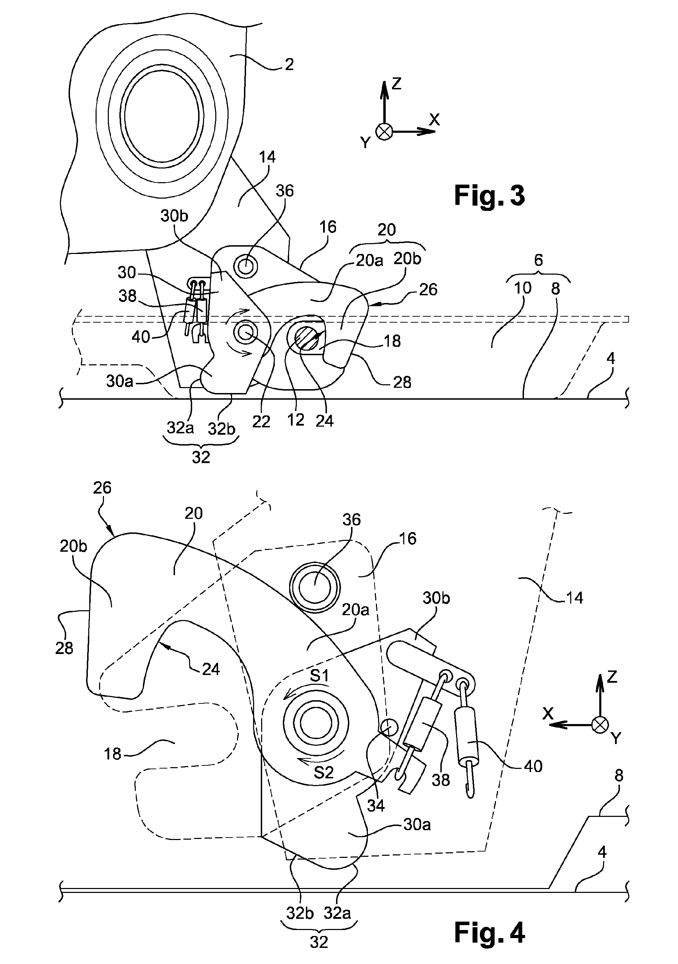

Le mécanisme 1 comporte en outre un crochet 20 formant un moyen de verrouillage. Le crochet 20 est monté mobile sur le pied 14 entre une position verrouillée (illustrée aux figures 1 et 3) dans laquelle le crochet 20 est agencé pour emprisonner le fil 12 dans l'encoche 18, et une position déverrouillée (illustrée aux figures 2 et 4) dans laquelle le crochet 20 est agencé pour dégager le fil 12.

Dans la forme d'exécution illustrée, le crochet 20 est monté pivotant sur le pied 14 autour d'un axe 22, d'une part dans un sens S1 et d'autre part dans un sens S2 opposé à S1. Le crochet 20 comprend une portion proximale 20a et une portion distale 20b s'étendant dans le prolongement de la portion proximale 20a formant un retour. Le crochet 20 comprend un bord intérieur 24 et un bord extérieur 26 concaves. Ce bord extérieur 26 présente avantageusement une rampe 28 dont la fonction apparaitra plus loin.

Le mécanisme 1 est de plus doté d'un levier 30 formant un moyen de détection. Le levier 30 est rappelé dans une position de repos (illustrée à la figure 4) par un ressort 40, formant un premier moyen de rappel élastique.

Le levier est déplaçable dans une position d'appui contre la paroi de fond 8 (illustrée aux figures 1 à 3).

Dans la forme d'exécution illustrée, le levier 30 est monté pivotant autour de l'axe 22, d'une part dans le sens S1 et d'autre part dans le sens S2. Le levier 30 présente une portion proximale 30a tournée vers la paroi fond 14 et une portion distale 30b opposée à la portion proximale 30a. La portion proximale 30a comprend un talon 32. Ce talon 32 présente une partie courbée 32a convexe prolongée par une partie plane 32b.

Le levier 30 comprend une butée 34 (plus visible à la figure 4) s'étendant axialement, tournée vers le crochet 20. De même, la plaque 16 comprend une butée 36 s'étendant axialement, tournée vers le crochet 20.

Ici, le ressort 40 est un ressort de traction raccordant la portion distale 30b du levier 30 au pied 14.

Le mécanisme 1 comporte un ressort 38 formant un second moyen de rappel élastique. Ici, le ressort 38 est un ressort de traction raccordant la portion proximale 20a du crochet 20 à la portion distale 30b du levier 30. Le ressort 38 permet de conjuguer le mouvement du crochet 20 à celui du levier 30 dans le sens S1.

II apparait donc que le levier 30 est piloté par l'action du ressort 40. Le mouvement du levier 30 est transmis au crochet 20 par le ressort 38.

Une opération d'ancrage du siège 2 au plancher 4 va maintenant être décrite. Initiallement le siège 2 est surélevé par rapport au plancher 4 (tel qu'illustré sur la figure 4). Le ressort 40 rappelle le levier 30 en position de repos . Dans cette position déverrouillée du crochet 20, le bord extérieur 26 de ce crochet 20 prend appui contre les butées 34 et 36.

Lors d'une première étape, un utilisateur vient placer le siège en surplomb du rail. Lors de cette opération, le pied 14 et le mécanisme d'ancrage 1 s'engage dans le rail 6. La partie proximale 30a du levier 30 s'engage dans le rail 6 de sorte la portion courbée 32a du talon 32 repose contre la paroi de fond 8. Sous le poids du siège 2, le levier 30 pivote dans le sens S1, jusqu'à ce que la portion 32b repose contre la paroi 8 du rail 6. Le levier 30 pivote ainsi de sa position de repos vers sa position d'appui.

Lors du pivotement du levier 30 de sa position de repos vers sa position d'appui, le ressort 38 exerce une force de rappel sur le crochet 20, qui pivote dans le sens S1. Ainsi, le crochet 20 se déplace de sa position déverrouillée (illustrée à la figure 4) vers sa position verrouillée (illustrée à la figure 1).

Lors d'une deuxième étape, l'utilisateur fait coulisser le siège 2, et par la même le mécanisme 1, le long du rail 6 dans une direction transversale au fil 12. L'utilisateur poursuit ce coulissement jusqu'à ce que la rampe 28 prenne appui contre le fil 12. Le talon traine contre la paroi de fond du rail 6.

La rampe 28 présente une inclinaison telle que le fil 12 exerce une force sur le crochet 20 entrainant son déplacement de sa position verrouillée (illustrée sur la figure 1) vers sa position déverrouillée (illustrée à la figure 2). En d'autres termes, le crochet 20 avale le fil au cours de son déplacement dans le rail 6.

Lors d'une troisième étape, l'utilisateur poursuit le coulissement jusqu'à ce que le ressort 38 rappelle le crochet 20 en position verrouillée (illustrée sur la figure 3). Le fil 12 est reçu à l'intérieur de l'encoche 8 et emprisonné par le crochet 20. Le siège 2 est ainsi ancré au plancher 4.

Une opération de désancrage du siège 2 va maintenant être décrite. Initialement le siège 2 est ancré au plancher 4 (illustré à la figure 3).

Lors d'une première étape, l'utilisateur soulève le siège 2 et le fait pivoter autour du fil 12 pour surélever le levier 30 par rapport à la paroi de fond 8. En retour, le ressort 40 fait pivoter le levier 30 dans le sens S2, et rappelle le levier 30 en position de repos.

A mesure que le levier 30 retrouve sa position de repos, la butée 34 exerce une force sur le crochet 20 qui en retour pivote dans le sens S2, jusqu'à prendre appui contre la butée 36. Le crochet 20 est alors en position déverrouillée.

Le fil 12 est alors libéré de l'encoche 8 et le siège 2 peut être désancré du plancher.

L'invention ne se limite pas à la seule forme d'exécution du mécanisme décrit ci-avant à titre d'exemple, elle en embrasse au contraire toutes les variantes de réalisation.

## Revendications

1. Mécanisme (1) d'ancrage d'un siège de véhicule à un fil d'ancrage fixé directement ou indirectement à un plancher dudit véhicule, **caractérisé en ce qu'**il comporte :
- un moyen de support (14) destiné à être fixé audit siège (2);
- un moyen de réception (16) du fil d'ancrage fixé au moyen de support (14);
- un moyen de verrouillage (20) du fil d'ancrage monté mobile sur le moyen de support (14) entre une position verrouillée dans laquelle le moyen de verrouillage (20) est agencé pour emprisonner le fil d'ancrage dans le moyen de réception (16), et une position déverrouillée dans laquelle le moyen de verrouillage (20) est agencé pour libérer le fil d'ancrage du moyen de réception (16) ;
- un moyen de détection (30) rappelé dans une position de repos par un premier moyen de rappel élastique raccordé au moyen de support (14), et déplaçable dans une position d'appui, direct ou indirect, contre le plancher du véhicule; et
le mécanisme d'ancrage est **caractérisé en ce qu'**il comprend
- un second moyen de rappel élastique (38) raccordant le moyen de verrouillage (20) au moyen de détection (30) ;
les premier et second moyens sont agencés de sorte qu'en réponse à un déplacement du moyen de détection (30) de sa position de repos vers sa position d'appui, le moyen de détection (30) entraine le moyen de verrouillage (20) de sa position déverrouillée vers sa position verrouillée, par l'intermédiaire du second moyen de rappel (38).

2. Mécanisme (1) d'ancrage selon la revendication 1, **caractérisé en ce que** le moyen de verrouillage (20) présente la forme d'un crochet.

3. Mécanisme (1) d'ancrage selon la revendication 2, **caractérisé en ce que** le moyen de verrouillage (20) comprend un bord intérieur (24) et un bord extérieur (26) concaves , le bord extérieur (26) étant conformé de sorte qu'en réponse à un déplacement du moyen de verrouillage (20) transversalement au fil d'ancrage, le fil d'ancrage exerce une force sur le bord extérieur (26) entrainant le déplacement du moyen de verrouillage (20) de sa position verrouillée vers sa position déverrouillée.

4. Mécanisme (1) d'ancrage selon la revendication 3, **caractérisé en ce que** le bord extérieur (26) présente une rampe (28) inclinée de sorte qu'en réponse à un déplacement du moyen de verrouillage (20) transversalement au fil d'ancrage, ce dernier exerce une force sur la rampe (28) entrainant le déplacement du moyen de verrouillage (20) de sa position verrouillée vers sa position déverrouillée.

5. Mécanisme (1) d'ancrage selon l'une quelconque des revendications 1 à 4, **caractérisé en ce que** le moyen de détection (30) et le moyen de verrouillage (20) sont montés pivotants sur le moyen de support (4) autour d'un même axe

6. Mécanisme (1) d'ancrage selon la revendication 5, **caractérisé en ce que** le moyen de détection (30) comprend une butée (34) s'étendant axialement sensiblement, et **en ce que** le moyen de verrouillage (20) est agencé pour prendre appui contre ladite butée (34).

7. Mécanisme (1) d'ancrage selon l'une quelconque des revendications 5 à 6, **caractérisé en ce que** le moyen de réception (16) comprend une butée (36) s'étendant sensiblement axialement, et **en ce que** le moyen de verrouillage (20) est agencé pour prendre appui contre la dite butée (36) en position déverrouillée.

8. Mécanisme (1) d'ancrage selon l'une quelconque des revendications 1 à 7, **caractérisé en ce que** le moyen de détection (30) présente un talon (32) destiné à prendre appui directement ou indirectement contre le plancher du véhicule, ce talon (32) présente une partie courbée (32a) convexe prolongée par une partie plane (32b).

9. Mécanisme (1) d'ancrage selon l'une quelconque des revendications 1 à 8, **caractérisé en ce que** le premier et/ou le second moyens de rappel élastique (40, 38) sont des ressorts de traction ou de torsion.

10. Siège (2) de véhicule, notamment de véhicule automobile, **caractérisé en ce qu'**il est équipé d'un mécanisme (1) d'ancrage selon l'une quelconque des revendications 1 à 9.

## Patentansprüche

1. Mechanismus (1) zur Verankerung eines Fahrzeugsitzes an einem festen Verankerungsdraht direkt oder indirekt an einen Boden des Fahrzeugs, **dadurch gekennzeichnet, dass** er Folgendes umfasst:
- ein Trägermittel (14), das ausgelegt ist, um an den Sitz (2) befestigt zu werden;
- ein Mittel zur Aufnahme (16) des Verankerungsdrahts, das an das Trägermittel (14) befestigt ist;
- ein Verriegelungsmittel (20) des Verankerungsdrahts, das beweglich auf dem Trägermittel (14) zwischen einer verriegelten Position, in der das Verriegelungsmittel (20) angeordnet ist, um den Verankerungsdraht in das Aufnahmemittel (16) einzuschließen, und einer entriegelten Position, in der das Verriegelungsmittel (20) angeordnet ist, um den Verankerungsdraht aus dem Aufnahmemittel (16) zu befreien, montiert ist,
- ein Detektionsmittel (30), das durch ein erstes elastisches Rückstellmittel, das mit dem Trägermittel (14) verbunden ist, in eine Ruheposition rückgestellt wird und direkt oder indirekt in eine Auflageposition gegen den Boden des Fahrzeugs verschoben werden kann,
wobei der Verankerungsmechanismus **dadurch gekennzeichnet ist, dass** er Folgendes umfasst:
- ein zweites elastisches Rückstellmittel (38), das das Verriegelungsmittel (20) mit dem Detektionsmittel (30) verbindet;
wobei das erste und das zweite Mittel derart angeordnet sind, dass in Antwort auf eine Verschiebung des Detektionsmittels (30) aus seiner Ruheposition in seine Auflageposition das Detektionsmittel (30) das Verriegelungsmittel (20) aus seiner entriegelten Position in seine verriegelte Position mit Hilfe des zweiten Rückstellmittels (38) führt.

2. Verankerungsmechanismus (1) nach Anspruch 1, **dadurch gekennzeichnet, dass** das Verankerungsmittel (20) die Form eines Hakens aufweist.

3. Verankerungsmechanismus (1) nach Anspruch 2, **dadurch gekennzeichnet, dass** das Verriegelungsmittel (20) einen konkaven inneren Rand (24) und eine konkaven äußeren Rand (26) umfasst, wobei der äußere Rand (26) derart gebildet ist, dass in Antwort auf eine Verschiebung des Verriegelungsmittels (20) quer zum Verankerungsdraht der Verankerungsdraht eine Kraft auf den äußeren Rand (26) ausübt, die die Verschiebung des Verriegelungsmittels (20) von seiner verriegelten Position in seine entriegelte Position hervorruft.

4. Verankerungsmechanismus (1) nach Anspruch 3, **dadurch gekennzeichnet, dass** der äußere Rand (26) eine geneigte Rampe (28) aufweist, so dass in Antwort auf eine Verschiebung des Verriegelungsmittels (20) quer zum Verankerungsdraht dieser Letztere eine Kraft auf die Rampe (28) ausübt, die die Verschiebung des Verriegelungsmittels (20) von seiner verriegelten Position in seine entriegelte Position hervorruft.

5. Verankerungsmechanismus (1) nach einem der Ansprüche 1 bis 4, **dadurch gekennzeichnet, dass** das Detektionsmittel (30) und das Verriegelungsmittel (20) drehend auf dem Trägermittel (4) um eine gleiche Achse montiert sind.

6. Verankerungsmechanismus (1) nach Anspruch 5, **dadurch gekennzeichnet, dass** das Nachweismittel (30) einen Anschlag (34) umfasst, der sich im Wesentlichen axial erstreckt, und dadurch, dass das Verriegelungsmittel (20) angeordnet ist, um gegen den Anschlag (34) aufzuliegen.

7. Verankerungsmechanismus (1) nach einem der Ansprüche 5 bis 6, **dadurch gekennzeichnet, dass** das Aufnahmemittel (16) einen Anschlag (36) umfasst, der sich im Wesentlichen axial erstreckt, und dadurch, dass das Verriegelungsmittel (20) angeordnet ist, um gegen den Anschlag (36) in der entriegelten Position aufzuliegen.

8. Verankerungsmechanismus (1) nach einem der Ansprüche 1 bis 7, **dadurch gekennzeichnet, dass** das Detektionsmittel (30) einen Absatz (32) aufweist, der ausgelegt ist, um direkt oder indirekt gegen den Boden des Fahrzeugs aufzuliegen, wobei dieser Absatz (32) einen konvexen gekrümmten Abschnitt (32a) aufweist, der durch einen ebenen Abschnitt (32b) verlängert ist.

9. Verankerungsmechanismus (1) nach einem der Ansprüche 1 bis 8, **dadurch gekennzeichnet, dass** das erste und/oder das zweite elastische Rückstellmittel (40, 38) Zug- oder Torsionsfedern sind.

10. Fahrzeugsitz (2), insbesondere eines Kraftfahrzeugs, **dadurch gekennzeichnet, dass** er mit einem Verankerungsmechanismus (1) nach einem der Ansprüche 1 bis 9 ausgestattet ist.

## Claims

1. A mechanism (1) for anchoring a vehicle seat to an anchoring wire directly or indirectly secured to a floor of said vehicle, **characterized in that** it includes:
- a supporting means (14) intended to be secured to said seat (2);
- a receiving means (16) of the anchoring wire secured to the supporting means (14);
- a locking means (20) of the anchoring wire movably mounted on the supporting means (14) between a locked position wherein the locking means (20) is arranged to trap the anchoring wire in the receiving means (16), and an unlocked position wherein the locking means (20) is arranged to release the anchoring wire from the receiving means (16);
- a detecting means (30) returned into a rest position by a first elastic return means connected to the supporting means (14), and displaceable in a bearing position, directly or indirectly, against the vehicle floor; and
the anchoring mechanism is **characterized in that** it comprises
- a second elastic return means (38) connecting the locking means (20) to the detecting means (30);
the first and second means are arranged so that in response to a displacement of the detecting means (30) from its rest position to its bearing position, the detecting means (30) drives the locking means (20) from its unlocked position to its locked position, via the second return means (38).

2. The anchoring mechanism (1) according to claim 1, **characterized in that** the locking means (20) presents the shape of a hook.

3. The anchoring mechanism (1) according to claim 2, **characterized in that** the locking means (20) comprises concave inner edge (24) and outer edge (26), the outer edge (26) being shaped so that in response to a displacement of the locking means (20) transversely to the anchoring wire, the anchoring wire exerts a force on the outer edge (26) leading to the displacement of the locking means (20) from its locked position to its unlocked position.

4. The anchoring mechanism (1) according to claim 3, **characterized in that** the outer edge (26) presents a ramp (28) inclined so that in response to a displacement of the locking means (20) transversely to the anchoring wire, the latter exerts a force on the ramp (28) leading to the displacement of the locking means (20) from its locked position to its unlocked position.

5. The anchoring mechanism (1) according to any one of claims 1 to 4, **characterized in that** the detecting means (30) and the locking means (20) are pivotally mounted on the supporting means (4) around a common axis.

6. The anchoring mechanism (1) according to claim 5, **characterized in that** the detecting means (30) comprises a stop (34) extending substantially axially, and **in that** the locking means (20) is arranged to bear against said stop (34).

7. The anchoring mechanism (1) according to any one of claims 5 to 6, **characterized in that** the receiving means (16) comprises a stop (36) extending substantially axially, and **in that** the locking means (20) is arranged to bear against said stop (36) in the unlocked position.

8. The anchoring mechanism (1) according to any one of claims 1 to 7, **characterized in that** the detecting means (30) presents a heel (32) intended to bear directly or indirectly against the floor of the vehicle, this heel (32) presents a convex curved portion (32a) prolonged by a planar portion (32b).

9. The anchoring mechanism (1) according to any one of claims 1 to 8, **characterized in that** the first and/or second elastic return means (40, 38) are traction or torsion springs.

10. A vehicle seat (2), in particular of a motor vehicle, **characterized in that** it is equipped with an anchoring mechanism (1) according to any one of claims 1 to 9.
